# EUROPEAN PATENT SPECIFICATION

(11) **EP 1 642 829 B1**
(45) Date of publication and mention of the grant of the patent: **05.12.2012**
(21) Application number: 05077257.3
(22) Date of filing: 04.10.2005
(51) Int. Cl.: B64D 15/02, B64C 1/14

(54) **Methods and systems for rain removal and de-icing of monolithic windshields**
Verfahren und Systeme für Regenabbau und die Enteisung der monolithischen Windschutzscheiben
Procédés et systèmes pour l'enlèvement de pluie et le dégivrage des pare-brise monolithiques

(30) Priority: 04.10.2004 US 958240
(43) Date of publication of application: 05.04.2006
(73) Proprietor: The Boeing Company, Chicago, IL 60606-1596 (US)
(72) Inventor: Wood, Jeffrey H., Eureka, MO 63025 (US); Sewell, Terry A., Ballwin, MO 63021 (US)
(74) Representative: McLeish, Nicholas Alistair Maxwell

(56) References cited:
- WO-A-98/58826
- GB-A- 754 301
- GB-A- 2 341 787
- US-A- 5 014 606
- US-A1- 2004 134 995

## Description

### FIELD OF THE INVENTION

This invention relates to aircraft design, and, more specifically, to rain removal and de-icing methods and systems for aircraft windshields.

### BACKGROUND OF THE INVENTION

A limiting factor in producing an aerodynamic forward fuselage is the planar cockpit windshield. The current window technology includes laminated windows that cannot be shaped with optimal aerodynamic curvature. The current glass ply laminates are planar and include windshield wipers for rain removal and integral heating plies for ice removal. The windshield wipers further reduce the aerodynamic efficiency of the forward fuselage.

Injection molded polycarbonate windshields can be shaped to enable the aerodynamic reshaping of the forward fuselage. This reshaping results in drag reduction unachievable with current glass-laminated flat windows. Injection molded aerodynamically shaped windshields include double curved surfaces that are not ideally shaped to accommodate typical windshield wipers that rely on a planar surface for intimate contact. Additionally, the very nature of reshaping the forward fuselage is to reduce drag. Windshield wipers disrupt clean airflow over the nose and induce drag and noise. Also, the injection-molded windshields are monolithic and do not include built-in laminated heating plies, therefore, they do not have ice removal capability that the current laminated glass windshields possess.

GB 2341 787 describes a vehicle windscreen system that uses a high pressure air flow directed over a windscreen to clean the windscreen.

Therefore, there exists a need for aerodynamically-shaped fuselages with rain removal and de-icing capabilities that don't hinder aerodynamic properties.

### SUMMARY OF THE INVENTION

In accordance with an aspect of the present invention there is provided a windshield system and a method for removing ice or rain from a windshield system according to the accompanying claims.

The present invention provides systems and methods for providing rain and ice removal on a windshield. The system may be implemented on a vehicle, such as an aircraft. In one embodiment, a system includes one or more injection molded windshields and a frame coupled to the one or more injection-molded windshields and to the vehicle. The frame includes a channel that directs at least one of air or fluid onto an exterior surface of the one or more windshields.

In accordance with further aspects of the invention, the frame includes one or more one-way check valves.

In accordance with the invention, a fluid pump is provided for pumping fluid through the channel and onto the one or more windshields.

In accordance with still further aspects of the invention, a reservoir is provided for storing de-icing fluid that is retrieved by the fluid pump.

In accordance with the invention, air sources are provided for pumping air through the channel and onto the one or more windshields.

In accordance with the invention, a controlling device is provided for controlling one or more of the fluid pump or the one or more air sources.

### BRIEF DESCRIPTION OF THE DRAWINGS

Preferred and alternate embodiments of the present invention are described in detail below with reference to the following drawings.

FIGURE 1 illustrates a front view of the fuselage of an aircraft that includes rain removal and de-icing components formed in accordance with an embodiment of the present invention;

FIGURE 2 illustrates a cut-away view of the fuselage section shown in FIGURE 1 including components of the system for performing rain and de-ice removal; and

FIGURE 3 is a side elevational view of an aircraft having a system in accordance with an alternate embodiment of the present invention.

### DETAILED DESCRIPTION

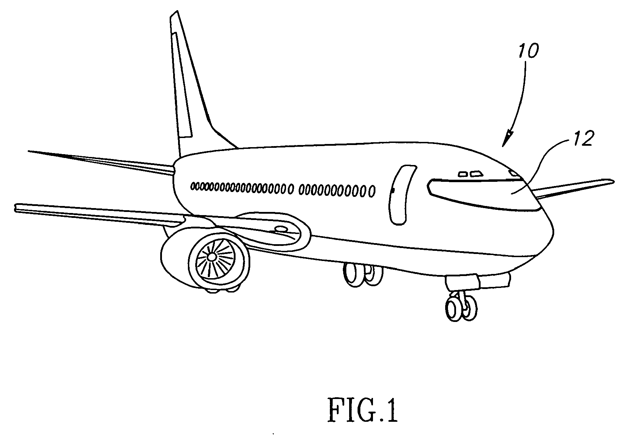

The present invention relates to advanced forward fuselage construction. Many specific details of certain embodiments of the invention are set forth in the following description and in FIGURES 1-3 to provide a thorough understanding of such embodiments. One skilled in the art, however, will understand that the present invention may have additional embodiments, or that the present invention may be practiced without several of the details described in the following description.

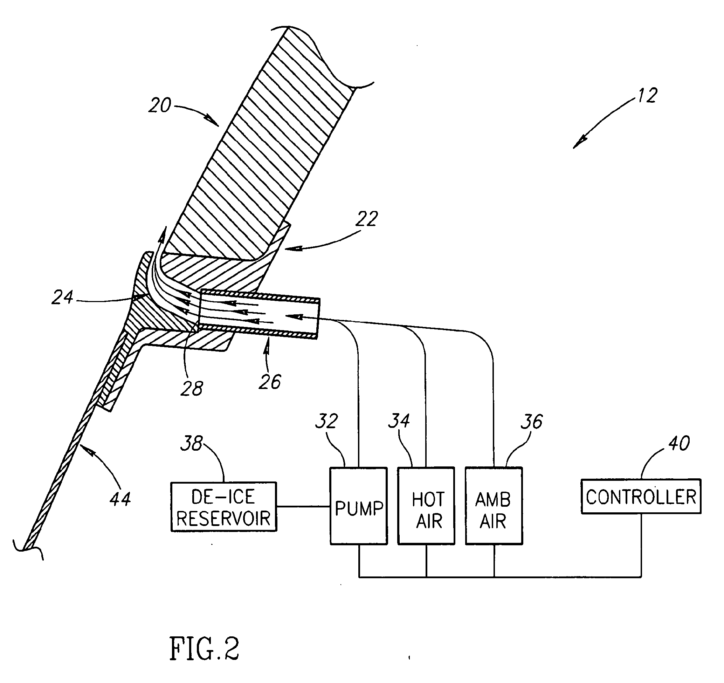

As shown in FIGURE 1, an aircraft 10 includes a monolithic windshield system 12. The monolithic windshield system 12 includes one or more injection-molded windshields and rain removal and de-icing components. The rain removal and de-icing components are shown in more detail below in FIGURE 2.

FIGURE 2 illustrates a cross-sectional view of a portion of the monolithic windshield system 12. The monolithic windshield system 12 includes monolithic windshield 20, a frame 22, a plenum 24, a flow device 26, and a check valve 28. Although only one plenum 24, flow device 26, and check valve 28 are shown in FIGURE 2, it will be appreciated that a plurality of these components will typically be used and may be distributed along selected portions of the perimeter of the windshield 20.

As further shown in FIGURE 2, the system 12 also includes a supply pump 32, a heated air source 34, an ambient air source 36, a de-ice fluid reservoir 38, and a controller 40. The windshield 20 is attached to the frame 22 by fasteners and/or adhesives. The frame 22 is attached to one or more support members 44 of the aircraft. The frame 22 receives one or more flow devices 26 at an interior surface of the frame 22. The plenum 24 is formed within the frame 22 and is positioned to receive fluid flow from one or more of the flow devices 26. Included within the one or more plenums 24 or the flow devices 26 are one-way check valves 28 that allow fluid or air to flow in the direction from the interior or the aircraft to the exterior of the aircraft. The supply pump 32, heated air source 34, and ambient air source 36 are all coupled to the one or more of the flow devices 26.

The pump 32 retrieves de-icing fluid stored in the de-ice fluid reservoir 38 and pumps it through the flow devices 26, the check valves 28, and the plenums 24 and onto the windshield 20. The heated air source 34 transmits high pressure heated air through the flow devices 26, the check valves 28, the plenums 24 and onto the windshield 20. The ambient air source 36 transmits unheated, high pressure air through the flow devices 26, the check valves 28, the plenums 24 and onto the windshield 20. Hot air generation can be from various sources, such as passive Vortex tubes, ducted engine bleed air, or active in-line electric heating elements, such as HOTWATT Air Process Heaters. In one embodiment, air flow velocity may be approx 40,000 feet per minute (FPM).

As shown in FIGURE 2, in this embodiment, the flow passage through the plenum 24 is representative of a generally converging flow duct that turns the flow and exhausts the flow through the plenum 24 approximately tangentially over the surface of the windshield 20 or commercial air handlers can by employed such as ARTX™ Air Curtain, ARTX™ High-Thrust Wedge Jet, WindJet® Air Knife, or Vortron's *Air*Power™ to introduce the airflow over the windshield 20. The flow passage through the plenum 24 may be designed to provide the desired degree of acceleration of the flow emanating from the pump 32 (or the heated air source 34 and ambient air source 36) to provide a suitable flow velocity onto the windshield 20. The duct or plenum 24 is bumped upward to alleviate any direct impingement of hot air on the windshield edge while at the same time create a "thermal blanket" for the localized deicing.

In another embodiment, the frame 22 receives a single flow device 26. The single flow device 26 supplies received high pressure air from the sources 34 or 36 or de-icing fluid from the pump 32 onto the windshield 20 through a single plenum 24. The single plenum 24 runs along the frame 22 below most or all of the bottom edge of the windshield 20.

The controller 40 is in signal communication with the supply pump 32, the heated air source 34, and the ambient air source 36 for controlling operation of each of those devices. The controller 40 might include a de-icing switch or a rain removal switch in the cockpit. The controller 40 may also include sensors for sensing when a condition exists that would require rain or ice removal, and a switch component for automatically controlling the supply pump 32, the heated air source 34, and the ambient air source 36 based on output of the sensors.

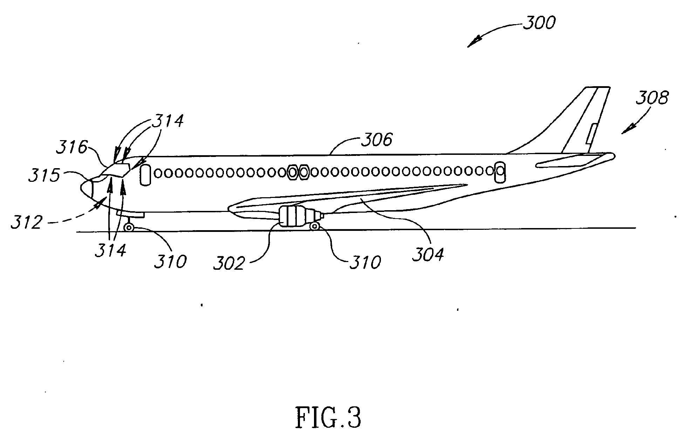

Those skilled in the art will also readily recognize that the foregoing embodiments may be incorporated into a wide variety of different systems. Referring now in particular to FIGURE 3, a side elevation view of an aircraft 300 having one or more of the disclosed embodiments of the present invention is shown. With the exception of the embodiments of windshield de-icing systems 314 according to the present invention, the aircraft 300 includes components and subsystems generally known in the pertinent art, and in the interest of brevity, will not be described in detail.

As shown in FIGURE 3, the aircraft 300 generally includes one or more propulsion units 302 that are coupled to wing assemblies 304, or alternately, to a fuselage 306 or even other portions of the aircraft 300. Additionally, the aircraft 300 also includes a tail assembly 308 and a landing assembly 310 coupled to the fuselage 306. The aircraft 300 further includes other systems and subsystems generally required for the proper operation of the aircraft 300. For example, the aircraft 300 includes a flight control system 312 (not shown in FIGURE 3), as well as a plurality of other electrical, mechanical and electromechanical systems that cooperatively perform a variety of tasks necessary for the operation of the aircraft 300. The aircraft 300 further includes one or more of the embodiments of windshield de-icing systems 314 according to the present invention, which may be incorporated into various portions of the frame 315 disposed about the windshield 316 of the aircraft 300.

The aircraft 300 shown in FIGURE 3 is generally representative of a commercial passenger aircraft, which may include, for example, the 737, 747, 757, 767 and 777 commercial passenger aircraft available from The Boeing Company of Chicago, IL. In alternate embodiments, however, the various embodiments of the present invention may also be incorporated into flight vehicles of other types. Examples of such flight vehicles may include manned or even unmanned military aircraft, rotary wing aircraft, or even ballistic flight vehicles, as illustrated more fully in various descriptive volumes, such as Jane's All The World's Aircraft, available from Jane's Information Group, Ltd. of Coulsdon, Surrey, UK.

While preferred and alternate embodiments of the invention have been illustrated and described, as noted above, many changes can be made without departing from the scope of the invention. For example, the plenum 24 may be located around the windshield 20 along any of the edges of the frame 22 in order to supply high pressure air or de-icing fluid onto the surface of the windshield 20. Furthermore, a single flow device 26 may be used to provide flow to a plurality of plenums 24, or a plurality of flow devices 26 may be used to provide flow to a single plenum 24. Accordingly, the scope of the invention is not limited by the disclosure of these preferred and alternate embodiments. Instead, the invention should be determined entirely by reference to the claims that follow.

## Claims

1. A windshield system (12) comprising:
one or more windshields (20) preferably injection molded;
a frame (22) coupled to the one or more windshields (20) and
coupleable to a vehicle (10), the frame comprising:
a channel for directing at least one of air or fluid onto an exterior surface of the one or more windshields (20);
**characterised by** a supply pump (32) for providing de-icing fluid to the channel; a heated air source (34) for providing heated air to the channel; an ambient air source (36) for providing ambient air to the channel and a controller (40), wherein the controller (40) is arranged to control the operation of the supply pump (32), the heated air source (34) and the ambient air source (36).

2. The system (12) of Claim 1, wherein the frame (22) includes one or more one-way check valves (28).

3. The system of Claim 1 or 2, further comprising:
a reservoir (38) for storing de-icing fluid that is retrieved by the fluid pump (32).

4. The system of any one of the preceding claims, wherein the controller (40) is arranged to automatically control the operation of the supply pump (32), the heated air source (34) and the ambient air source (36) based on the output of a sensor arranged for sensing when a condition exists that would require rain or ice removal.

5. An aircraft (300) comprising:
a fuselage (306);
wing assemblies (304) and an empennage operatively coupled to the fuselage (306);
at least one propulsion unit (302) operatively coupled to the fuselage (306); and
a windshield system (12) according to any of claims 1-4.

6. A method for removing ice or rain from a windshield system (12), the method comprising:
providing one or more windshields (20);
a frame (22) coupled to the one or more windshields (20),
wherein the frame (22) includes a channel for directing at least one of air or fluid onto an exterior surface of the one or more windshields (20); the method comprising the following steps: coupling a supply pump (32), a heated air source (34) and an ambient air source (36) to the channel and arranging for a controller (40) to control the operation of the supply pump (32) to provide deicing fluid or to control the source of heated air or the source of ambient air.

7. The method of claim 6, using the system (12) of any of claims 1-4.

## Patentansprüche

1. Windschutzscheiben-System (12), das umfasst:
eine oder mehrere, vorzugsweise spritzgegossene Windschutzscheiben (20);
einen Rahmen (22), der mit der einen oder den mehreren Windschutzscheiben (20) verbunden und mit einem Fahrzeug (10) koppelbar ist, wobei der Rahmen aufweist:
einen Kanal zum Leiten von Luft und/oder eines Fluids zu einer Außenfläche der einen oder der mehreren Windschutzscheiben (20);
**gekennzeichnet durch** eine Förderpumpe (32) zur Zufuhr eines Enteisungsfluids in den Kanal; eine Quelle für erwärmte Luft (34) zur Zufuhr von erwärmter Luft in den Kanal; eine Quelle für Umgebungsluft (36) zur Zufuhr von Umgebungsluft in den Kanal und eine Steuerung (40), wobei die Steuerung (40) zur Steuerung des Betriebs der Förderpumpe (32), der Quelle für erwärmte Luft (34) und der Quelle für Umgebungsluft (36) ausgebildet ist.

2. System (12) nach Anspruch 1, worin der Rahmen (22) ein oder mehrere Einweg-Sperrventile (28) umfasst.

3. System nach Anspruch 1 oder 2, das ferner umfasst: ein Reservoir (38) zur Lagerung des von der Fluidpumpe (32) abgerufenen Enteisungsfluids.

4. System nach einem der vorhergehenden Ansprüche, worin die Steuerung (40) so ausgebildet ist, dass sie den Betrieb der Förderpumpe (32), die Quelle für erwärmte Luft (34) und die Quelle für Umgebungsluft (36) auf der Basis eines Sensorausgangs selbsttätig steuert, wobei der Sensor zum Erfassen eines das Entfernen von Regen oder Eis erforderlich machenden Zustands ausgebildet ist.

5. Luftfahrzeug (300), das umfasst:
einen Rumpf (306);
Flügelgruppen (304) und ein mit dem Rumpf (306) wirkverbundenes Leitwerk (306);
zumindest ein mit dem Rumpf (306) wirkverbundenes Triebwerk (302); und ein Windschutzscheiben-System (12) nach einem der Ansprüche 1 bis 4.

6. Verfahren zum Entfernen von Eis oder Regen von einem Windschutzscheiben-Syste (12), wobei das Verfahren umfasst:
Bereitstellen einer oder mehrerer Windschutzscheiben (20); eines Rahmens (22), der mit der einen oder den mehreren Windschutzscheiben (20) verbunden ist;
wobei der Rahmen (22) einen Kanal zum Leiten von Luft und/oder eines Fluids zu einer Außenfläche der einen oder der mehreren Windschutzscheiben (20) umfasst, wobei das Verfahren die folgenden Schritte aufweist:
Verbinden einer Förderpumpe (32), einer Quelle für erwärmte Luft (34) und einer Quelle für Umgebungsluft (36) mit dem Kanal und Ausbilden einer Steuerung (40) zur Steuerung des Betriebs der Förderpumpe (32) zur Zufuhr von Enteisungsfluid, zur Steuerung der Quelle für erwärmte Luft und zur Steuerung der Quelle für Umgebungsluft.

7. Verfahren nach Anspruch 6 unter Verwendung des Systems (12) nach einem der Ansprüche 1 bis 4.

## Revendications

1. Système de pare-brise (12) comprenant :
un ou plusieurs pare-brise (20) de préférence moulé(s) par injection ;
un cadre (22) raccordé au ou aux pare-brise (20) et
pouvant être raccordé à un véhicule (10), le cadre comprenant :
un canal pour diriger au moins l'un de l'air ou du fluide sur une surface extérieure du ou des pare-brise (20) ; **caractérisé par** une pompe d'alimentation (32) destinée à fournir du fluide de dégivrage au canal ; une source d'air chauffé (34) destinée à fournir de l'air chauffé au canal ; une source d'air ambiant (36) destinée à fournir de l'air ambiant au canal et un contrôleur (40), le contrôleur (40) étant conçu pour contrôler le fonctionnement de la pompe d'alimentation (32), de la source d'air chauffé (34) et de la source d'air ambiant (36).

2. Système (12) selon la revendication 1, dans lequel le cadre (22) comprend un ou plusieurs clapets anti-retour (28).

3. Système selon la revendication 1 ou 2, comprenant en outré :
un réservoir (38) pour stocker le fluide de dégivrage qui est récupéré par la pompe à fluide (32).

4. Système selon l'une quelconque des revendications précédentes, dans lequel le contrôleur (40) est conçu pour contrôler automatiquement le fonctionnement de la pompe d'alimentation (32), la source d'air chauffé (34) et la source d'air ambiant (36) sur la base de la sortie d'un capteur conçu pour détecter s'il existe une condition pouvant nécessiter l'enlèvement de pluie ou de glace.

5. Avion (300) comprenant :
un fuselage (306) ;
des ensembles d'ailes (304) et un empennage raccordé opérationnellement au fuselage (306) ;
au moins une unité de propulsion (302) raccordée opérationnellement au fuselage (306) ; et
un système de pare-brise (12) selon l'une quelconque des revendications 1 à 4.

6. Procédé d'enlèvement de glace ou de pluie d'un système de pare-brise (12), le procédé comprenant :
la fourniture d'un ou plusieurs pare-brise (20) ;
un cadre (22) raccordé à un ou plusieurs pare-brise (20),
dans lequel le cadre (22) comprend un canal pour diriger au moins l'un de l'air ou du fluide sur une surface extérieure du ou des pare-brise (20) ; le procédé comprenant les étapes suivantes : le raccordement d'une pompe d'alimentation (32), d'une source d'air chauffé (34) et d'une source d'air ambiant (36) au canal et l'agencement d'un contrôleur (40) pour contrôler le fonctionnement de la pompe d'alimentation (32) destinée à fournir du fluide de dégivrage ou pour contrôler la source d'air chauffé ou la source d'air ambiant.

7. Procédé selon la revendication 6, utilisant le système (12) selon l'une quelconque des revendications 1 à 4.
